# EUROPEAN PATENT SPECIFICATION

(11) **EP 2 091 187 B1**
(45) Date of publication and mention of the grant of the patent: **01.03.2017**
(21) Application number: 08849167.5
(22) Date of filing: 14.11.2008
(51) Int. Cl.: H04L 12/18, H04L 12/28, H04Q 11/00

(54) **A CONTROL METHOD, DEVICE AND SYSTEM FOR MULTICAST ACCESS IN PASSIVE OPTICAL NETWORK**
EIN KONTROLLVERFAHREN, GERÄT UND SYSTEM FÜR MULTICAST-ZUGANG IN PASSIVEN OPTISCHEN NETZEN
PROCÉDÉ, DISPOSITIF ET SYSTÈME DE CONTRÔLE D'ACCÈS MULTIDIFFUSION DANS UN RÉSEAU OPTIQUE PASSIF

(30) Priority: 16.11.2007 CN 200710124640
(43) Date of publication of application: 19.08.2009
(73) Proprietor: Huawei Technologies Co., Ltd., Longgang District Shenzhen, Guangdong 518129 (CN)
(72) Inventor: QU, Zhijun, Guangdong Province 518129 (CN)
(74) Representative: Pfenning, Meinig & Partner mbB
(86) International application number: PCT/CN2008/073054
(87) International publication number: WO 2009/062449

(56) References cited:
- WO-A1-2006/092778
- CN-A- 1 756 210
- CN-A- 101 009 530
- CN-A- 101 072 144
- CN-A- 101 174 909
- US-A1- 2005 243 837
- US-A1- 2006 127 091

## Description

### Field of the Invention

The present invention relates to a passive optical network technology, and in particular, to a method, device and system for multicast access control in a passive optical network.

### Background of the Invention

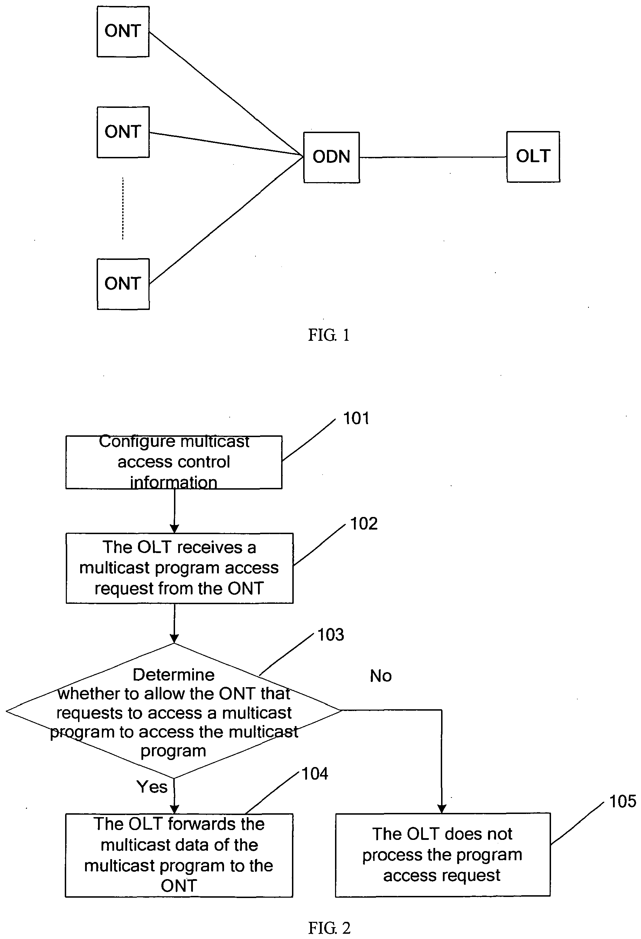

The passive optical network (PON) is an optical access technology using a point-to-multipoint topology structure. As shown in FIG. 1, the PON is composed of an optical line terminal (OLT) in a central office, an optical network terminal (ONT) on the user side, and an optical distribution network (ODN). "Passive" means that the ODN does not include any active electronic device or power supply and is composed of passive optical devices such as a fiber and a splitter or a combiner.

The ODN divides a fiber into multiple pieces, and the ONT shares the bandwidths. When an uplink service is transmitted from the ONT to the OLT, the uplink service is accessed in time division multiple access (TDMA) mode to avoid conflicts. Each ONT can only send its own uplink data in a timeslot specified by the OLT. When a downlink service is transmitted from the OLT to the ONT, the service data is multicast to each ONT in time division multiplexing (TDM) mode. In addition, a specific identifier is used to indicate which ONT each timeslot belongs to, and based on the identifier, each ONT chooses its own traffic flow. The specific identifier may be a virtual path identifier (VPI) in an ATM passive optical network (APON), a logical link identifier (LLID) in an Ethernet passive optical network (EPON) or a gigabit encapsulation mode port identifier (GEM port ID) in a gigabit passive optical network (GPON).

With the passive point-to-multipoint structure and downlink physical layer broadcast transmission mechanism, the PON is very suitable for carrying multicast services, for example, Internet Protocol television (IPTV). However, due to limited bandwidths, the PON needs to control multicast access when providing multicast services. Currently, the multicast access control is implemented by controlling the number of uplink multicast access requests of the ONT. Nevertheless, the downlink bandwidths of a PON terminal user are shared. In this case, if any ONT applies for a program through a PON interface, the OLT may always forward the program through the PON interface. Thus, in the prior art where the multicast access control is implemented only by controlling the number of uplink multicast access requests of the ONT, all the downlink bandwidths may be occupied by multicast, thus affecting other services.

Document EP1981196A1 discloses a passive optical network, equipment and method for supporting the multicast service, it discloses the WDM-PON and the method for realizing multicast service according to the present invention can transmit multicast service to be multicasted or broadcasted using a single wavelength.

Document US2005/0243837 A1 provides a system that performs layer 3 (L3) aware switching in an Ethernet passive optical network (EPON) which includes a central node and at least one remote node. During operation, the system maintains a set of mapping information which indicates a correspondence relationship between a logic link identifier of a remote node, a medium access control (MAC) address for a subscriber. Upon receiving a packet which contains an IP address, the system selectively attaches a proper logical link identifier to the packet based on the mapping information and the IP address contained in the packet, thereby allowing only one proper remote node to receive packet.

Document US2006/0127091A1 provides a method of dynamically managing multicast groups and allocating multicast service wavelengths for the highest channel sufficiency. According to the present invention, the share indices of wavelengths of all multicast service groups, which employ broadcasting wavelengths and data wavelengths, are periodically ascertained on the basis of IGMP snooping-based technology in a WDM-PON.

A further prior art solution is disclosed in document WO 2006/092778 A1.

### Summary of the Invention

Various embodiments of the present invention are directed to providing a method, device and system for multicast access control in a passive optical network (PON) to overcome the weaknesses of the prior art, in which all the downlink bandwidths are occupied by the multicast and other services are affected.

Accordingly, an embodiment of the present invention provides a method for multicast access control in a PON, where multicast access control information and a multicast forwarding table for forwarding multicast data are configured on an optical line terminal (OLT); and a multicast filtering table for receiving multicast data is configured on an optical network terminal (ONT), and the OLT is connected through an optical distribution network, ODN, to the ONT. The method includes: receiving, by the OLT, a multicast program access request from the ONT; determining, by the OLT, according to the multicast access control information whether to allow the ONT to access a requested multicast program, and if the ONT is allowed to access the requested multicast program, refreshing its own multicast forwarding table, and instructing the ONT to refresh the multicast filtering table, wherein the multicast access control information comprises multicast bandwidth of a multicast source, maximum multicast bandwidth of an optical interface of the OLT and maximum number of multicast programs requested by the ONT, the optical interface being interconnected with the ODN; and receiving, by the OLT, the requested multicast program sent from a multicast source and forwarding the requested multicast program according to the refreshed multicast forwarding table; wherein the process of determining, according to the multicast access control information, whether to allow the ONT to access the requested multicast program by the OLT comprises: judging, by the OLT, according to the accumulated multicast bandwidth of the multicast source whether the multicast bandwidth of the optical interface exceeds the maximum multicast bandwidth of the optical interface of the OLT and whether the number of multicast programs of this ONT exceeds the maximum number of multicast programs after the multicast program access request is accepted, if the accumulated multicast bandwidth of the optical interface does not exceed the maximum multicast bandwidth of the optical interface of the OLT and the number of multicast programs of this ONT docs not exceed the maximum number of multicast programs either, allowing the ONT to access the requested multicast program; otherwise, forbidding the ONT to access the requested multicast program

An embodiment of the present invention provides an OLT applicable to a PON. The OLT includes: a network interface, configured to: interconnect with an IP network, and receive multicast data from a multicast source; an optical interface, configured to: interconnect with an ODN, receive a multicast program access request from an ONT, and forward multicast data of a multicast program requested by the ONT to the ONT; a forwarding unit, configured to forward the multicast program to a corresponding optical interface according to a multicast forwarding table; a storing unit, configured to store configured multicast access control information, the multicast access control information comprises multicast bandwidth of the multicast source, maximum multicast bandwidth of the optical interface and maximum number of multicast programs requested by the ONT; and a controlling unit, configured to: determine, according to the multicast access control information, whether to allow the ONT to access the requested multicast program, and if allowing the ONT to access the requested multicast program, refresh its own multicast forwarding table, and instruct the ONT to refresh the multicast filtering table on the ONT; wherein the controlling unit comprises: a first judging unit, configured to judge, according to the multicast bandwidth of the multicast source, whether the accumulated multicast bandwidth of the optical interface of the OLT exceeds the maximum multicast bandwidth of the optical interface of the OLT after the multicast program access request is accepted; a second judging unit, configured to judge whether the number of multicast programs of this ONT exceeds the maximum number of multicast programs; and a deciding unit, configured to: allow the ONT to access the requested multicast program if the judgment results of the first judging unit and the second judging unit are negative; and otherwise, forbid the ONT to access the requested multicast program.

An embodiment of the present invention provides a PON system. The PON system includes an OLT and an ONT. The OLT is interconnected with an IP network and connected to the ONT through an ODN; the OLT is configured to forward multicast data according to a multicast forwarding table configured on the OLT; the ONT is configured to receive its own multicast data according to a multicast filtering table configured on the ONT; the OLT is configured to receive a multicast program access request from the ONT, and determines, according to multicast access control information configured on the OLT, whether to allow the ONT to access a requested multicast program; and if the ONT is allowed to access the requested multicast program, the OLT is configured to refresh its own multicast forwarding table, and instructs the ONT to refresh the multicast filtering table on the ONT; the multicast access control information comprises multicast bandwidth of a multicast source, maximum multicast bandwidth of the optical interface of the OLT and maximum number of multicast programs requested by the ONT, the optical interface being interconnected with the ODN; wherein OLT is further configure to judge, according to the multicast bandwidth of the multicast source, whether the accumulated multicast bandwidth of the optical interface of the OLT exceeds the maximum multicast bandwidth of the optical interface of the OLT and whether the number of multicast programs of the ONT exceeds the maximum number of multicast programs after the multicast program access request is accepted; if the accumulated multicast bandwidth of the optical interface of the OLT does not exceed the maximum multicast bandwidth of the optical interface of the OLT and the number of multicast programs of the ONT does not exceed the maximum number of multicast programs either, the OLT is configured to allow the ONT to access the requested multicast program;
otherwise, the OLT is configure to forbid the ONT (2) to access the requested multicast program.

According to the technical solution provided in embodiments of the present invention, the OLT performs multicast access control in the PON according to the multicast access control information. Compared with the prior art in which multicast access control is implemented by controlling the number of uplink multicast access requests of the ONT, embodiments of the present invention avoid the case that all the downlink bandwidths are occupied by the multicast, thus ensuring the normal transmission of other services.

### Brief Description of the Drawings

FIG. 1 shows a structure of a PON in the prior art;
FIG. 2 is a flowchart of a method for multicast access control in a PON in a first embodiment of the present invention; and
FIG. 3 is a flowchart of a system for multicast access control in a PON in a second embodiment of the present invention.

### Detailed Description of the Invention

Embodiments of the present invention provide a method, device and system for multicast access control in a PON. The OLT supports multicast services, multicast management protocols and multicast control, and the ONT supports multicast services and multicast management protocols. The ONT sends a multicast program access request to the OLT, and the OLT processes the multicast program access request. If the access is allowed, the ONT receives multicast streams forwarded by the OLT.

FIG. 2 is a flowchart of a method for multicast access control in the PON in the first embodiment of the present invention.

The method includes the following steps:
Step 101: Multicast access control information is configured in the OLT.

The multicast access control information includes multicast bandwidth of a multicast source (bandwidth required for multicast programs, including maximum bandwidth and mean bandwidth) and maximum multicast bandwidth of an optical interface (connected to an ODN) of the OLT.

The multicast access control information may further include the maximum number of multicast programs requested by the ONT that is connected to the OLT.

The multicast access control information may be configured on the OLT through a network management system (NMS) or command lines.
Step 102: The OLT receives a multicast program access request from the ONT.

The multicast program access request may be an Internet Group Management Protocol Join (IGMP Join) message, which carries the IP address of the multicast source of a requested multicast program.
Step 103: The OLT determines, according to the configured multicast access control information, whether to allow the ONT that requests to access the multicast program to access the multicast program.

When the multicast access control information includes multicast bandwidth of the multicast source and maximum multicast bandwidth of the optical interface of the OLT, the OLT judges, according to the bandwidth of the multicast source of the requested multicast program, whether the multicast bandwidth of the optical interface exceeds the configured maximum multicast bandwidth after a new multicast program access request is accepted. If not, the OLT allows the ONT to access the multicast program; otherwise, the OLT forbids the ONT to access the multicast program.

When the multicast access control information includes the maximum number of multicast programs requested by the ONT that is connected to the OLT besides multicast bandwidth of the multicast source and maximum multicast bandwidth of the optical interface of the OLT, the OLT judges, according to the bandwidth of the multicast source to be accessed, whether the multicast bandwidth of the optical interface exceeds the configured maximum multicast bandwidth and whether the number of multicast programs of the ONT that requests multicast access exceeds the configured maximum number of multicast programs after the new multicast program access request is accepted; if both the judgment results are negative, the OLT allows the ONT to access the multicast program; otherwise the OLT forbids the ONT to access the multicast program.
Step 104: If the ONT is allowed to access the multicast program, the OLT forwards the multicast data (or multicast streams) of the multicast program to the ONT.

The OLT refreshes its own multicast forwarding table, and adds the ONT to the user list associated with the multicast program in the multicast forwarding table. For example, the OLT adds the ONT ID or Port ID of the ONT to the user list associated with the multicast program in the multicast forwarding table. The OLT receives multicast data of the multicast program sent from the multicast source, and forwards the multicast data of the multicast program to the ONT according to the multicast forwarding table.

The OLT may also instruct the ONT to refresh the multicast filtering table, so that the ONT can obtain the multicast data of the multicast program requested by the ONT by filtering the received data according to the multicast filtering table. The OLT may notify the ONT through the operations, administration, and maintenance (OAM) channel of the PON system. That is, a notification message may be carried in an OAM frame and sent to the ONT. In the GPON, the OLT instructs the ONT to refresh the multicast filtering table through a multicast control frame of the ONT management and control interface (OMCI) of the OMCI channel. In the EPON, the OLT instructs the ONT to refresh the multicast filtering table through the multicast control frame of the OAM channel.
Step 105: If it is determined to forbid the ONT to access the multicast program, the OLT does not process the request.

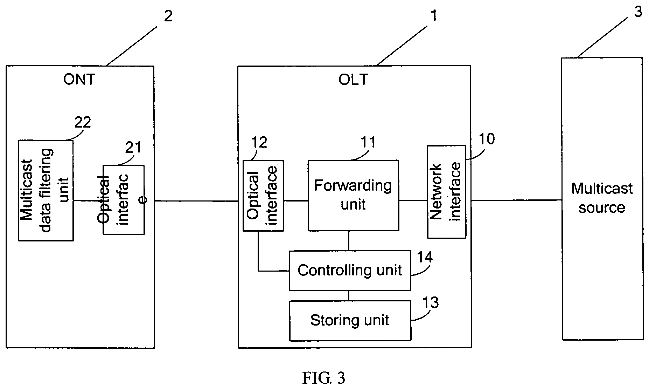

FIG. 3 is a flowchart of a system for multicast access control in a PON in the second embodiment of the present invention. The system includes at least an OLT 1 and an ONT 2, where the ONT 2 sends a multicast program access request to the OLT 1, and the OLT 1 determines, according to the configured multicast access control information, whether to allow the ONT 2 to access the requested multicast program; and if so, the OLT 1 receives multicast data of the multicast program sent from a multicast source 3, and forwards the multicast data of the multicast program to the ONT 2.

The OLT 1 includes a network interface 10, an optical interface 12, a storing unit 13, and a controlling unit 14. The network interface 10 is configured to: interconnect the OLT 1 with an IP network and receive multicast data from the multicast source 3. The optical interface 12 is configured to: connect the OLT 1 to the ODN, receive a multicast program access request from the ONT 2, and forward the multicast data of the multicast program requested by the ONT 2 to the ONT 2. The storing unit 13 is configured to store multicast access control information that is configured through the NMS or command lines. A forwarding unit 11 is configured to forward the multicast data of the multicast source 3 from the network interface 10 to the optical interface 12 according to the multicast forwarding table. The controlling unit 14 is configured to: determine, according to the multicast access control information stored in the storing unit 13, whether to allow the ONT that requests to access the multicast program to access the multicast program; and if the ONT is allowed to access the multicast program, control the network interface 10 in receiving the multicast data of the requested multicast program, and control the optical interface 12 in forwarding the multicast data of the requested multicast program to the ONT. Because the PON is a point-to-multipoint system, the preceding steps of controlling the reception of data of the multicast source and forwarding of multicast data are performed through cooperation between the OLT 1 and the ONT 2. That is, the OLT 1 refreshes its own multicast forwarding table (the multicast forwarding table in the forwarding unit 11), and instructs the ONT 2 to refresh the multicast filtering table on the ONT 2, so that the OLT 1 can forward the multicast data according to the refreshed multicast forwarding table and that the ONT 2 can receive multicast data according to the refreshed multicast filtering table. The process of refreshing the multicast forwarding table and multicast filtering table may be referred to the preceding method, and will not be further described.

The multicast access control information includes one or any combination of the following: multicast bandwidth of the multicast source 3, maximum multicast bandwidth of the optical interface 12 of the OLT 1, and maximum number of multicast programs requested by the ONT 2. The multicast bandwidth of the multicast source 3 is stored in the storing unit 13 by associating the ID of the multicast source 3 (for example, the IP address of the multicast source) and the multicast bandwidth of the multicast source 3.

The multicast access control information may further include the maximum number of multicast programs requested by the ONT 2 that is connected to the OLT 1. The maximum number of multicast programs requested by the ONT 2 is stored in the storing unit 13 by associating the ID of the ONT 2 with the maximum number of multicast programs requested by the ONT 2.

The storing unit 13 and controlling unit 14 of the OLT 1 may be integrated on a chip or implemented by using a CPU.

The controlling unit 14 may send the notification that instructs the ONT 2 to refresh the multicast filtering table to the ONT 2 through an OAM channel, for example, the OMCI channel in the GPON system or OAM channel in the EPON system, so that the ONT 2 can refresh the multicast filtering table on the ONT 2 according to the notification.

To determine, according to the multicast access control information in the storing unit 13, whether to allow the ONT 2 that requests to access a multicast program to access the multicast program, the controlling unit 14 judges, according to the multicast bandwidth of the multicast source 3, whether the multicast bandwidth of the optical interface 21 exceeds the maximum multicast bandwidth and whether the number of multicast programs of the ONT 2 exceeds the maximum number of multicast programs after the multicast program access request is accepted; if both the judgment results are negative, the controlling unit 14 allows the ONT 2 to access the requested multicast program; otherwise, the controlling unit 14 forbids the ONT 2 to access the requested multicast program.

The controlling unit 14 may be composed of a first judging unit, a second judging unit, and a deciding unit, where the first judging unit is configured to judge according to the multicast bandwidth of the multicast source whether the multicast bandwidth of the optical interface exceeds the maximum multicast bandwidth after the multicast program access request is accepted; the second judging unit is configured to judge whether the number of multicast programs of the ONT exceeds the maximum number of multicast programs; and the deciding unit is configured to: allow the ONT to access the requested multicast program when the judgment results of the first judging unit and the second judging unit are negative, or forbid the ONT to access the requested multicast program when the judgment results of the first judging unit and the second judging unit are positive.

The ONT 2 includes: an optical interface 21, configured to: connect the ONT to the ODN 2, send a multicast program access request to the OLT 1, and receive multicast data of the requested multicast program forwarded by the OLT 1; and a multicast data filtering unit 22, configured to receive multicast data of the requested multicast program according to the multicast filtering table.

The ONT 2 may receive the notification of refreshing the multicast filtering table from the OLT through an OAM channel, for example, the OMCI channel in the GPON system or the OAM channel in the EPON system, and refresh the multicast filtering table in the multicast data filtering unit 22 according to the notification.

Although the present invention has been described through some exemplary embodiments, the invention is not limited to such embodiments. It is apparent that those skilled in the art can make various modifications and variations to the invention without departing from the scope of the invention. The invention is intended to cover the modifications and variations provided that they fall in the scope of protection defined by the following claims or their equivalents.

## Claims

1. A method for multicast access control in a passive optical network, PON, wherein multicast access control information and a multicast forwarding table for forwarding multicast data are configured on an optical line terminal, OLT (1); and a multicast filtering table for receiving multicast data is configured on an optical network terminal, ONT (2); and wherein the OLT (1) is connected through an optical distribution network, ODN, to the ONT (1); the method comprising
receiving, by the OLT (1), a multicast program access request from the ONT (2);
determining, by the OLT (1), according to the multicast access control information whether to allow the ONT (2) to access a requested multicast program, and if allowing the ONT (2) to access the requested multicast program, refreshing its own multicast forwarding table, and instructing the ONT (2) to refresh the multicast filtering table, wherein the multicast access control information comprises multicast bandwidth of a multicast source (3), maximum multicast bandwidth of an optical interface (12) of the OLT (1) and maximum number of multicast programs requested by the ONT (2), the optical interface (12) being interconnected with the ODN; and
receiving, by the OLT (1), the requested multicast program sent from a multicast source, and forwarding the the requested multicast program according to the refreshed multicast forwarding table;
wherein the process of determining, according to the multicast access control information, whether to allow the ONT (2) to access the requested multicast program by the OLT (1) comprises:
judging, by the OLT (1), according to the multicast bandwidth of the multicast source whether the accumulated multicast bandwidth of the optical interface (12) of the OLT exceeds the maximum multicast bandwidth of the optical interface of the OLT and whether the number of multicast programs of this ONT (2) exceeds the maximum number of multicast programs after the multicast program access request is accepted,
if the accumulated multicast bandwidth of the optical interface (12) of the OLT does not exceed the maximum multicast bandwidth of the optical interface of the OLT and the number of multicast programs of this ONT (2) does not exceed the maximum number of multicast programs either, allowing the ONT (2) to access the requested multicast program;
otherwise, forbidding the ONT to access the requested multicast program.

2. The method of claim 1, whereby the step of instructing the ONT (2) to refresh the multicast filtering table comprises:
instructing the ONT (2) to refresh the multicast filtering table through an operations, administration, and maintenance, OAM, channel of a PON system.

3. An optical line terminal, OLT, applicable to a passive optical network, PON, comprising:
a network interface (10), configured to: interconnect with an IP network, and receive multicast data from a multicast source (3);
an optical interface (12), configured to: interconnect with an optical distribution network, ODN, receive a multicast program access request from an optical network terminal, ONT (2), and forward multicast data of a multicast program requested by the ONT (2) to the ONT (2);
a forwarding unit (11), configured to forward the multicast program to a corresponding optical interface (12) according to a multicast forwarding table; **characterized by** further comprising:
a storing unit (13), configured to store configured multicast access control information, the multicast access control information comprising multicast bandwidth of the multicast source (3), maximum multicast bandwidth of the optical interface (12) and maximum number of multicast programs requested by the ONT (2); and
a controlling unit (14), configured to: determine, according to the multicast access control information, whether to allow the ONT (2) to access the requested multicast program, and, if allowing the ONT (2) to access the re-quested multicast program, refresh its own multicast forwarding table, and instruct the ONT (2) to refresh the multicast filtering table on the ONT (2);
wherein the controlling unit (14) comprises:
a first judging unit, configured to judge, according to the multicast bandwidth of the multicast source (3), whether the accumulated multicast bandwidth of the optical interface (12) of the OLT exceeds the maximum multicast bandwidth of the optical interface of the OLT after the multicast program access request is accepted;
a second judging unit, configured to judge whether the number of multicast programs of this ONT (2) exceeds the maximum number of multicast programs; and
a deciding unit, configured to: allow the ONT (2) to access the requested multicast program if the judgment results of the first judging unit and the second judging unit are negative; and otherwise, forbid the ONT (2) to access the requested multicast program.

4. A passive optical network, PON, comprising an optical line terminal, OLT (1), and an optical network terminal, ONT (2), wherein
the OLT (1) is interconnected with an IP network and connected to the ONT(2) through an optical distribution network, ODN;
the OLT (1) is configured to forward a requested multicast program according to a multicast forwarding table configured on the OLT (1); and
the ONT (2) is configured to receive a requested multicast program according to a multicast filtering table configured on the ONT (2);
wherin:
the OLT (1) is configured to receive a multicast program access request form the ONT (2), and determine, according to multicast access control information configured on the OLT (1), whether to allow the ONT (2) to access a requested multicast program; if the ONT (2) is allowed to access the requested multicast program, the OLT (1) is configured to refreshe its own multicast forwarding table, and instruct the ONT (2) to refresh the multicast filtering table on the ONT (2); and
that the multicast access control information comprises multicast bandwidth of a multicast source (3), maximum multicast bandwidth of an optical interface (12) of the OLT (1) and maximum number of multicast programs requested by the ONT (2), the optical interface (12) being interconnected with the ODN;
wherein OLT (1) is further configured to judge, according to the multicast bandwidth of the multicast source (3), whether the accumulated multicast bandwidth of the optical interface (12) of the OLT exceeds the maximum multicast bandwidth of the optical interface of the OLT and whether the number of multicast programs of this ONT (2) exceeds the maximum number of multicast programs after the multicast program access request is accepted;
if the multicast bandwidth of the optical interface (12) of the OLT does not exceed the maximum multicast bandwidth of the optical interface of the OLT and the number of multicast programs of this ONT (2) does not exceed the maximum number of multicast programs either, the OLT (1) is configured to allow the ONT (2) to access the requested multicast program;
otherwise, the OLT (1) is configure to forbid the ONT (2) to access the requested multicast program.

## Patentansprüche

1. Verfahren für Multicast-Zugangssteuerung in einem passiven optischen Netzwerk, PON, wobei Multicast-Zugangssteuerungsinformationen und eine Multicast-Weiterleitungstabelle zum Weiterleiten von Multicast-Daten in einem optischen Leitungsendgerät, OLT, (1) konfiguriert werden; und eine Multicast-Filtertabelle zum Empfangen von Multicast-Daten in einem optischen Netzwerkendgerät, ONT, (2) konfiguriert wird; und wobei das OLT (1) durch ein optisches Verteilungsnetzwerk, ODN, mit dem ONT (1) verbunden ist; wobei das Verfahren Folgendes umfasst:
Empfangen, durch das OLT (1), einer Multicast-Programmzugangsanforderung von dem ONT (2);
Bestimmen, durch das OLT (1), gemäß den Multicast-Zugangssteuerungsinformationen, ob dem ONT (2) zu gestatten ist, auf ein angefordertes Multicast-Programm zuzugreifen, und wenn dem ONT (2) gestattet wird, auf das angeforderte Multicast-Programm zuzugreifen, Auffrischen seiner eigenen Multicast-Weiterleitungstabelle und Anweisen des ONT (2), die Multicast-Filtertabelle aufzufrischen, wobei die Multicast-Zugangssteuerungsinformationen eine Multicast-Bandbreite einer Multicast-Quelle (3), eine maximale Multicast-Bandbreite einer optischen Schnittstelle (12) des OLT (1) und eine maximale Anzahl von Multicast-Programmen, die von dem ONT (2) angefordert werden, umfassen, wobei die optische Schnittstelle (12) mit dem ODN verschaltet ist; und
Empfangen, durch das OLT (1), des angeforderten Multicast-Programms, das von einer Multicast-Quelle gesandt wird, und Weiterleiten des angeforderten Multicast-Programms gemäß der aufgefrischten Multicast-Weiterleitungstabelle;
wobei der Prozess des Bestimmens gemäß den Multicast-Zugangssteuerungsinformationen, ob dem ONT (2) zu gestatten ist, auf das angeforderte Multicast-Programm zuzugreifen, durch das OLT (1) Folgendes umfasst:
Beurteilen, durch das OLT (1), gemäß der Multicast-Bandbreite der Multicast-Quelle, ob die akkumulierte Multicast-Bandbreite der optischen Schnittstelle (12) des OLT die maximale Multicast-Bandbreite der optischen Schnittstelle des OLT überschreitet und ob die Anzahl von Multicast-Programmen dieses ONT (2) die maximale Anzahl von Multicast-Programmen überschreitet, nachdem die Multicast-Programmzugangsanforderung angenommen wird,
wenn die akkumulierte Multicast-Bandbreite der optischen Schnittstelle (12) des OLT die maximale Multicast-Bandbreite der optischen Schnittstelle des OLT nicht überschreitet und die Anzahl von Multicast-Programmen dieses ONT (2) die maximale Anzahl von Multicast-Programmen auch nicht überschreitet, Gestatten des ONT (2), auf das angeforderte Multicast-Programm zuzugreifen;
anderenfalls Verbieten des ONT, auf das angeforderte Multicast-Programm zuzugreifen.

2. Verfahren nach Anspruch 1, wobei der Schritt des Anweisens des ONT (2), die Multicast-Filtertabelle aufzufrischen, Folgendes umfasst:
Anweisen des ONT (2), die Multicast-Filtertabelle durch einen Betriebs-, Verwaltungs- und Wartungs- bzw. OAM-Kanal eines PON-Systems aufzufrischen.

3. Optisches Leitungsendgerät, OLT, geeignet für ein passives optisches Netzwerk, PON, umfassend:
eine Netzwerkschnittstelle (10), konfiguriert zum: Verschalten mit einem IP-Netzwerk und Empfangen von Multicast-Daten von einer Multicast-Quelle (3);
eine optische Schnittstelle (12), konfiguriert zum: Verschalten mit einem optischen Verteilungsnetzwerk, ODN, Empfangen einer Multicast-Programmzugangsanforderung von einem optischen Netzwerkendgerät, ONT, (2) und Weiterleiten von Multicast-Daten eines von dem ONT (2) angeforderten Multicast-Programms an das ONT (2);
eine Weiterleitungseinheit (11), konfiguriert zum Weiterleiten des Multicast-Programms an eine korrespondierende optische Schnittstelle (12) gemäß einer Multicast-Weiterleitungstabelle;
**dadurch gekennzeichnet, dass** es ferner Folgendes umfasst:
eine Speichereinheit (13), konfiguriert zum Speichern von konfigurierten Multicast-Zugangssteuerungsinformationen, wobei die Multicast-Zugangssteuerungsinformationen eine Multicast-Bandbreite der Multicast-Quelle (3), eine maximale Multicast-Bandbreite der optischen Schnittstelle (12) und eine maximale Anzahl von Multicast-Programmen, die von dem ONT (2) angefordert werden, umfassen; und
eine Steuereinheit (14), konfiguriert zum: Bestimmen, gemäß den Multicast-Zugangssteuerungsinformationen, ob dem ONT (2) zu gestatten ist, auf das angeforderte Multicast-Programm zuzugreifen, und wenn dem ONT (2) gestattet wird, auf das angeforderte Multicast-Programm zuzugreifen, Auffrischen seiner eigenen Multicast-Weiterleitungstabelle und Anweisen des ONT (2), die Multicast-Filtertabelle in dem ONT (2) aufzufrischen;
wobei die Steuereinheit (14) Folgendes umfasst:
eine erste Beurteilungseinheit, konfiguriert zum Beurteilen, gemäß der Multicast-Bandbreite der Multicast-Quelle (3), ob die akkumulierte Multicast-Bandbreite der optischen Schnittstelle (12) des OLT die maximale Multicast-Bandbreite der optischen Schnittstelle des OLT überschreitet, nachdem die Multicast-Programmzugangsanforderung angenommen wird;
eine zweite Beurteilungseinheit, konfiguriert zum Beurteilen, ob die Anzahl von Multicast-Programmen dieses ONT (2) die maximale Anzahl von Multicast-Programmen überschreitet; und
eine Entscheidungseinheit, konfiguriert zum: Gestatten des ONT (2), auf das angeforderte Multicast-Programm zuzugreifen, wenn die Beurteilungsergebnisse der ersten Beurteilungseinheit und der zweiten Beurteilungseinheit negativ sind; und anderenfalls Verbieten des ONT (2), auf das angeforderte Multicast-Programm zuzugreifen.

4. Passives optisches Netzwerk, PON, umfassend ein optisches Leitungsendgerät, OLT, (1) und ein optisches Netzwerkendgerät, ONT, (2), wobei
das OLT (1) mit einem IP-Netzwerk verschaltet ist und durch ein optisches Verteilungsnetzwerk, ODN, mit dem ONT (2) verbunden ist;
das OLT (1) konfiguriert ist, ein angefordertes Multicast-Programm gemäß einer Multicast-Weiterleitungstabelle, die in dem OLT (1) konfiguriert ist, weiterzuleiten; und
das ONT (2) konfiguriert ist, ein angefordertes Multicast-Programm gemäß einer Multicast-Filtertabelle, die in dem ONT (2) konfiguriert ist, zu empfangen;
wobei:
das OLT (1) konfiguriert ist, eine Multicast-Programmzugangsanforderung von dem ONT (2) zu empfangen und gemäß Multicast-Zugangssteuerungsinformationen, die in dem OLT (1) konfiguriert sind, zu bestimmen, ob dem ONT (2) zu gestatten ist, auf ein angefordertes Multicast-Programm zuzugreifen; wenn dem ONT (2) gestattet wird, auf das angeforderte Multicast-Programm zuzugreifen, ist das OLT (1) konfiguriert, seine eigene Multicast-Weiterleitungstabelle aufzufrischen und das ONT (2) anzuweisen, die Multicast-Filtertabelle in dem ONT (2) aufzufrischen; und
die Multicast-Zugangsanforderungsinformationen eine Multicast-Bandbreite einer Multicast-Quelle (3), eine maximale Multicast-Bandbreite einer optischen Schnittstelle (12) des OLT (1) und eine maximale Anzahl von Multicast-Programmen, die von dem ONT (2) angefordert werden, umfassen, wobei die optische Schnittstelle (12) mit dem ODN verschaltet ist;
wobei das OLT (1) ferner konfiguriert ist, gemäß der Multicast-Bandbreite der Multicast-Quelle (3) zu beurteilen, ob die akkumulierte Multicast-Bandbreite der optischen Schnittstelle (12) des OLT die maximale Multicast-Bandbreite der optischen Schnittstelle des OLT überschreitet und ob die Anzahl von Multicast-Programmen dieses ONT (2) die maximale Anzahl von Multicast-Programmen überschreitet, nachdem die Multicast-Programmzugangsanforderung angenommen wird;
wenn die Multicast-Bandbreite der optischen Schnittstelle (12) des OLT die maximale Multicast-Bandbreite der optischen Schnittstelle des OLT nicht überschreitet und die Anzahl von Multicast-Programmen dieses ONT (2) die maximale Anzahl von Multicast-Programmen auch nicht überschreitet, ist das OLT (1) konfiguriert, dem ONT (2) zu gestatten, auf das angeforderte Multicast-Programm zuzugreifen;
anderenfalls ist das OLT (1) konfiguriert, dem ONT (2) zu verbieten, auf das angeforderte Multicast-Programm zuzugreifen.

## Revendications

1. Procédé permettant un contrôle d'accès multidiffusion dans un réseau optique passif (PON), dans lequel des informations de contrôle d'accès multidiffusion et une table de transmission en multidiffusion pour transmettre des données de multidiffusion sont configurées sur un terminal de ligne optique (OLT) (1) ; et une table de filtrage multidiffusion pour recevoir des données de multidiffusion est configurée sur un terminal de réseau optique (ONT) (2) ; et dans lequel le terminal OLT (1) est connecté à travers un réseau de distribution optique (ODN) au terminal ONT (1) ; le procédé consistant à :
recevoir, au moyen du terminal OLT (1), une demande d'accès à un programme de multidiffusion du terminal ONT (2) ;
déterminer, au moyen du terminal OLT (1), en fonction des informations de contrôle d'accès multidiffusion, s'il faut permettre au terminal ONT (2) d'avoir accès à un programme de multidiffusion demandé et si on permet au terminal ONT (2) d'avoir accès au programme de multidiffusion demandé, rafraîchir sa propre table de transmission en multidiffusion et donner comme instruction au terminal ONT (2) de rafraîchir la table de filtrage multidiffusion, les informations de contrôle d'accès multidiffusion comprenant une largeur de bande de multidiffusion d'une source de multidiffusion (3), une largeur de bande de multidiffusion maximale d'une interface optique (12) du terminal OLT (1) et un nombre maximal de programmes de multidiffusion demandés par le terminal ONT (2), l'interface optique (12) étant interconnectée avec le réseau ODN ; et
recevoir, au moyen du terminal OLT (1), le programme de multidiffusion demandé envoyé depuis une source de multidiffusion et transmettre le programme de multidiffusion demandé en fonction de la table de transmission en multidiffusion rafraîchie ;
le processus de détermination, en fonction des informations de contrôle d'accès multidiffusion, s'il faut permettre au terminal ONT (2) d'avoir accès au programme de multidiffusion demandé au moyen du terminal OLT (1) consistant à :
juger, au moyen du terminal OLT (1), en fonction de la largeur de bande de multidiffusion de la source de multidiffusion si la largeur de bande de multidiffusion accumulée de l'interface optique (12) du terminal OLT dépasse la largeur de bande de multidiffusion maximale de l'interface optique du terminal OLT et si le nombre de programmes de multidiffusion de ce terminal ONT (2) dépasse le nombre maximal de programmes de multidiffusion après que la demande d'accès à un programme de multidiffusion a été acceptée,
si la largeur de bande de multidiffusion accumulée de l'interface optique (12) du terminal OLT ne dépasse pas la largeur de bande de multidiffusion maximale de l'interface optique du terminal OLT et si le nombre de programmes de multidiffusion de ce terminal ONT (2) ne dépasse pas le nombre maximal de programmes de multidiffusion non plus, permettre au terminal ONT (2) d'avoir accès au programme de multidiffusion demandé ;
sinon, empêcher le terminal ONT d'avoir accès au programme de multidiffusion demandé.

2. Procédé selon la revendication 1, dans lequel l'étape consistant à donner comme instruction au terminal ONT (2) de rafraîchir la table de filtrage multidiffusion consiste à :
donner comme instruction au terminal ONT (2) de rafraîchir la table de filtrage multidiffusion au moyen d'un canal d'opération, d'administration et de maintenance (OAM) d'un système de réseau PON.

3. Terminal de ligne optique (OLT) qui peut être appliqué à un réseau optique passif (PON), comprenant :
une interface réseau (10), configurée pour : être interconnectée avec un réseau IP et recevoir des données de multidiffusion d'une source de multidiffusion (3) ;
une interface optique (12), configurée pour : être interconnectée avec un réseau de distribution optique (ODN), recevoir une demande d'accès à un programme de multidiffusion d'un terminal de réseau optique (ONT) (2) et transmettre des données de multidiffusion d'un programme de multidiffusion demandé par le terminal ONT (2) au terminal ONT (2) ;
une unité de transmission (11), configurée pour transmettre le programme de multidiffusion à une interface optique (12) correspondante en fonction d'une table de transmission en multidiffusion ;
**caractérisé en ce qu'**il comprend en outre :
une unité de stockage (13), configurée pour stocker des informations de contrôle d'accès multidiffusion configurées, les informations de contrôle d'accès multidiffusion comprenant une largeur de bande de multidiffusion de la source de multidiffusion (3), une largeur de bande de multidiffusion maximale de l'interface optique (12) et un nombre maximal de programmes de multidiffusion demandés par le terminal ONT (2) ; et
une unité de commande (14), configurée pour : déterminer, en fonction des informations de contrôle d'accès multidiffusion, s'il faut permettre au terminal ONT (2) d'avoir accès au programme de multidiffusion demandé et s'il est permis au terminal ONT (2) d'avoir accès au programme de multidiffusion demandé, rafraîchir sa propre table de transmission en multidiffusion et donner comme instruction au terminal ONT (2) de rafraîchir la table de filtrage multidiffusion sur le terminal ONT (2) ;
l'unité de commande (14) comprenant :
une première unité de jugement, configurée pour juger, en fonction de la largeur de bande de multidiffusion de la source de multidiffusion (3), si la largeur de bande de multidiffusion accumulée de l'interface optique (12) du terminal OLT dépasse la largeur de bande de multidiffusion maximale de l'interface optique du terminal OLT après que la demande d'accès à un programme de multidiffusion a été acceptée ;
une seconde unité de jugement, configurée pour juger si le nombre de programmes de multidiffusion de ce terminal ONT (2) dépasse le nombre maximal de programmes de multidiffusion ; et
une unité de décision, configurée pour : permettre au terminal ONT (2) d'avoir accès au programme de multidiffusion demandé si les résultats de jugement de la première unité de jugement et de la seconde unité de jugement sont négatifs ; et sinon, empêcher le terminal ONT (2) d'avoir accès au programme de multidiffusion demandé.

4. Réseau optique passif (PON) comprenant un terminal de ligne optique (OLT) (1) et un terminal de réseau optique (ONT) (2), dans lequel
le terminal OLT (1) est interconnecté avec un réseau IP et connecté au terminal ONT (2) à travers un réseau de distribution optique (ODN) ;
le terminal OLT (1) est configuré pour transmettre un programme de multidiffusion demandé en fonction d'une table de transmission en multidiffusion configurée sur le terminal OLT (1) ; et
le terminal ONT (2) est configuré pour recevoir un programme de multidiffusion demandé en fonction d'une table de filtrage multidiffusion configurée sur le terminal ONT (2) ;
dans lequel :
le terminal OLT (1) est configuré pour recevoir une demande d'accès à un programme de multidiffusion du terminal ONT (2) et déterminer, en fonction des informations de contrôle d'accès multidiffusion configurées sur le terminal OLT (1), s'il faut permettre au terminal ONT (2) d'avoir accès à un programme de multidiffusion demandé ; si le terminal ONT (2) est autorisé à avoir accès au programme de multidiffusion demandé, le terminal OLT (1) est configuré pour rafraîchir sa propre table de transmission en multidiffusion et donner comme instruction au terminal ONT (2) de rafraîchir la table de filtrage multidiffusion sur le terminal ONT (2) ; et
les informations de contrôle d'accès multidiffusion comprennent une largeur de bande de multidiffusion d'une source de multidiffusion (3), une largeur de bande de multidiffusion maximale d'une interface optique (12) du terminal OLT (1) et un nombre maximal de programmes de multidiffusion demandés par le terminal ONT (2), l'interface optique (12) étant interconnectée avec le réseau ODN ;
dans lequel le terminal OLT (1) est en outre configuré pour juger, en fonction de la largeur de bande de multidiffusion de la source de multidiffusion (3), si la largeur de bande de multidiffusion accumulée de l'interface optique (12) du terminal OLT dépasse la largeur de bande de multidiffusion maximale de l'interface optique du terminal OLT et si le nombre de programmes de multidiffusion de ce terminal ONT (2) dépasse le nombre maximal de programmes de multidiffusion après que la demande d'accès à un programme de multidiffusion a été acceptée ;
si la largeur de bande de multidiffusion de l'interface optique (12) du terminal OLT ne dépasse pas la largeur de bande de multidiffusion maximale de l'interface optique du terminal OLT et si le nombre de programmes de multidiffusion de ce terminal ONT (2) ne dépasse pas le nombre maximal de programmes de multidiffusion non plus, le terminal OLT (1) est configuré pour permettre au terminal ONT (2) d'avoir accès au programme de multidiffusion demandé ;
sinon, le terminal OLT (1) est configuré pour empêcher le terminal ONT (2) d'avoir accès au programme de multidiffusion demandé.
